# EUROPEAN PATENT APPLICATION

(11) **EP 3 450 510 A1**
(43) Date of publication of application: **06.03.2019**
(21) Application number: 17731658.5
(22) Date of filing: 17.04.2017
(51) Int. Cl.: C09D 5/08, C09D 5/12

(54) **WATER-DISPERSION PRIMER AND PRODUCTION METHOD THEREOF**

(30) Priority: 27.04.2016 RU 2016116564
(71) Applicant: Dukhopelnikov, Dmitriy Vasilevich, Rostovskaya oblast, Novocherkassk 346400 (RU)
(72) Inventor: MOROZ, Kaleriya Klavdievna, Rostov-na-Donu 344019 (RU); SIZOVA, Natalya Ivanovna, Rostov-na-Donu 344023 (RU); DUKHOPELNIKOV, Dmitriy Vasilevich, Rostov-na-Donu 344023 (RU)
(74) Representative: Chimini, Francesco
(86) International application number: PCT/RU2017/000242
(87) International publication number: WO 2017/188855

(57) **Abstract**

The invention relates to water-dispersion materials, such as - rust modifiers and is used for obtaining both priming and independent coating, when painting steel of all grades, cast iron and non-ferrous metals. The water-dispersion priming enamel comprises as a film former - synthetic latex with pH 3.5-4.0, fillers, coloring pigment, as rust modifiers - phosphonic acids (NTPA and OEDPA), as an agent regulating rheological properties, flowability and drying time - methylpyrrolidone, with the following ratio of components, in wt. %: synthetic polymer, 50% water dispersion, pH 3.5-4.0 - 35-65; cross-linking agent - 1-3; phosphonic acids (NTPA: 0.1-0.6, and OEDPA: 1.8-2.3); fillers - 25-40; acrylic disperser - 1-1.5; coloring concentrate - 8-16; foam suppressor - 0.1-0.5; ethylene glycol - 8.0-10.0; methylpyrrolidone - 1-5; water - the rest. The method for obtaining the priming enamel includes mixing the components in a high-speed mixer. The water-dispersion priming enamel is fire- and explosion-proof, non-toxic, can be used for priming and painting large-sized, medium-sized and small products. The coating based on the water-dispersion priming enamel works in all macroclimatic zones. On its basis a coating is formed with a drastically reduced (up to 3-5 minutes) formation time in natural conditions, characterized by high physical and mechanical as well as physical and chemical properties.

## Description

### Technical Field

The invention relates to water-dispersion paintwork materials - rust modifiers, used for painting surfaces of various grades of steel, including cindery steel and with tightly held rust; of cast iron and non-ferrous metals. The claimed water-dispersion priming enamel can be used for painting diverse metal large-sized and smaller products to obtain decorative coating with enhanced anticorrosion properties, which protects products in various macroclimatic zones. The composition is fire- and explosion-proof, nontoxic.

### Background Art

It is known that paintwork compositions of the aforesaid purpose comprise synthetic latexes as a film former, e.g. butadiene-styrene, styrene-acrylate or acrylate, fillers, pigments, corrosion inhibitors and auxiliary additives.

It is known from the prior art (the application RU 94032085 A1, dated 10/03/1997) the latex composition comprising the following components, in wt. %:
Butadiene-styrene latex, 50% water dispersion with pH 6.8-7.2 - 36.1-40.0
Nitriltrimethylphosphonic acid (NTPA) - 1.5-2.0
Oxyethylidenediphosphonic acid (OEDPA) - 0.3-0.4
Fillers (kaolin, talc) - 11.5-19.0
Pigments - 0.7-14.25
Nonionic surfactant - 0.25-0.5
Foam suppressor - 0.3-0.8
Ethylene glycol - 8.0-11
Natrosol (hydroxyethylcellulose) - 0.05-0.1
Water - the rest.

The disadvantages of this composition are: long drying time - not less than 1 hour at (20+2)°C, low corrosion resistance of a single-layer coating, lack of water- and salt-resistance, which does not allow using it in the marine climate, and insufficient coating hardness - not more than 0.3 a.u., according to M-3 device.

The latex composition according to the Author's Certificate SU 1019842 A1, dated 07/05/1992 (prototype) is the closest by technical essence, such composition includes synthetic polymers, phosphonic acids, modifying additives, pigments, fillers. As a modifying additive, NTPA or its mixture with OEDPA is used with the component ratio of 1:0.3-1. It is known as a primer - rust modifier VD-KCh-0184 and was produced according to TU 6-10-191583. On the basis of this material, a sufficiently corrosion-resistant priming coating is formed on a metal surface with points of cinder and tightly held rust. The disadvantage of this composition is its inability to be used as an independent coating due to the lack of the necessary complex of decorative and protective properties. This particular invention allowed further development of a class of water-dispersion materials - rust modifiers.

### Disclosure of Invention

The object of the present invention is to eliminate the aforementioned disadvantages of the prior art.

The technical result being achieved by the claimed invention is creation of the water-dispersion priming enamel with reduced time of coating formation and with improved physical and mechanical as well as physical and chemical properties.

The said technical result is achieved by using 50% water dispersion of synthetic latex with pH 3.5-4.0 as a film former. The use of latex with a low pH in combination with phosphonic acids enhances action of the composition as a rust modifier, increases the adhesion of coating and reduces the foaming of paint, when it is manufactured and applied to metal surfaces. Addition of methylpyrrolidone to the composition of priming enamel allows regulating rheological properties of paint and its flowability. The combination of synthetic latex with pH 3.5-4.0 with methylpyrrolidone, due to the synergistic effect, reduces drastically the coating formation time (the coating dries to the 3^{rd} degree at the temperature (20+2) °C within 3-5 minutes). The coating based on water-dispersion priming enamel has high physical and mechanical as well as physical and chemical properties and can be used as an independent coating on any metal surfaces in all macroclimatic zones. As a pigment, the acrylic-based coloring concentrate is used, and the water-soluble foam suppressor is used to reduce foaming during manufacture and application of the composition. As a frost-hardening agent of the composition - ethylene glycol. Water (GOST 2874-72) with a total hardness not more than 5-6 mg-equ./L is used as a solvent.

The composition can be used for all steel grades, cast iron and non-ferrous metals, in all macroclimatic zones and it has a significantly reduced coating formation time in natural conditions.

The claimed water-dispersion priming enamel comprising synthetic latex, phosphonic acids, modifying additive, regulators of physical and chemical properties, auxiliary substances and water, is characterized by the fact that it contains 50% water dispersion of synthetic polymer with pH 3.5-4.0 as a film former, phosphonic acids as a rust modifier and methylpyrrolidone as an agent regulating rheological properties, flowability, viscosity and drying parameters of coating with the following ratio of components, in wt. %:

| | |
|---|---|
| - synthetic polymer, 50% water dispersion | - 35.0-65.0 |
| - phosphonic acids: | |
| nitriltrimethylphosphonic acid | - 0.1-0.6 |
| oxyethylidenediphosphonic acid | - 1.8-2.3 |
| -methylpyrrolidone | - 1.0-5.0 |

Fillers, pigments, wetting agents for fillers, foam suppressors, cross-linking agents, frost-hardening agent are used as auxiliary substances, wherein as fillers it contains kaolin, talc and titanium dioxide, as a pigment - acrylic-based coloring concentrate (YD-AK Solta 400), as a wetting agent for fillers - acrylic disperser with pH 7.5 (Rustan 10 DN), as a foam suppressor - VUK-04, as a cross-linking agent - 30% water solution of NH₄OH, as a frost-hardening agent - ethylene glycol with the following ratio of components, in wt. %:

| | | |
|---|---|---|
| - fillers: | | |
| kaolin | - | 12-7 |
| talc | - | 8-11 |
| titanium dioxide | - | 5-12 |
| - acrylic-based coloring concentrate (VD-AK Solta 400) | - | 8-16 |
| - wetting agent - acrylic disperser (Rustan 10 DN) | - | 1.0-1.5 |
| - foam suppressor VUK-04 | - | 0.1-0.5 |
| - cross-linking agent 30% water solution of NH₄OH | - | 1.0-3.0 |
| - ethylene glycol | - | 8.0-10.0 |
| - water | - | the rest |

### Description of Embodiments

The composition is prepared as follows. The semi-finished product is prepared in a high-speed mixer, consisting of, in kg: water - 138.0, ethylene glycol - 80.0, OEDPA - 9.0, NTPA - 45.0. The semi-finished product is mixed for 30 minutes; the fillers are fed into the mixer through the loading hatch in amount, in kg: acrylic disperser - 10.0, fillers - 250.0. The rotation rate is increased. A sample for dispersion testing is taken in 2 hours from the start of dispersing, then every one hour. On reaching 20 µm dispersity according to "Klin" device (grindometer), the mixing rate is set to the minimum, and the following is added to the dissolver in amount, in kg: cross-linking agent - 30.0, synthetic latex - 450.0, coloring concentrate - 100.0, methylpyrrolidone - 3.0 and foam suppressor - 3.0 for composing the paint and bringing it into compliance. The paint mixing is carried out for 30 minutes at the minimum rate to avoid coagulation of latex. After mixing, the paint is kept for 3 hours for settling the foam.

The physical and mechanical properties of paintwork coatings obtained on the basis of analogous and claimed compositions are given in Table 1; the results of accelerated climatic tests are shown in Table 2.

**Table 1. Comparative characteristics of the coatings being obtained**

| No. | Indexes | Prototype SU 1019842 | Analogue RU 9403285 | Claimed composition |
|---|---|---|---|---|
| 1 | 2 | 3 | 4 | 5 |
| 1 | Adhesion according to GOST 15140, points. | 2-3 | 1 | 1 |
| 2 | Hardness according to GOST 5233 according to M-3 device, a.u. | 0.2 | 0.3 | 0.5 |
| 3 | Film strength on impact, according to U-1 device, cm | 40 | 40 | 50 |
| 4 | Drying time to the 3^{rd} degree according to GOST 10007, min. at (20+2)°C | 60 | 60 | 3-5 |
| 5 | Water-resistance according to GOST 9.403, method A, hour. | 36 | 48 | 250 |
| 6 | Salt-resistance according to GOST 9.403, hour | - | - | 200 |
| 7 | Oil-resistance according to GOST 9.403 (benzene, white spirit) | Non-resistant | Non-resistant | Resistant |
| 8 | Chemical resistance according to GOST 9.403 H₂SO₄ - 38% water solution, NaOH - 40% water solution | Non-resistant | Non-resistant | Resistant |
| 9 | Wettability (limiting wetting angle, in degrees) | 70 | 60 | less than 30 |

**Table 2. Results of accelerated climatic tests**

| Name of coating | Testing method according to GOST 9.401 | Test results in cycles | | | | | |
|---|---|---|---|---|---|---|---|
| | | 1 | 5 | 10 | 15 | 20 | 25 |
| Analogous composition - 1 layer, drying at (20+2)°C | Temperate climate | no change | no change | color change | color change | pimple | flaking |
| | Tropical climate | no change | no change | chalking | pimple | flaking | taken out of testing |
| Claimed composition - 1 layer, drying at (20+2)°C | Temperate climate | no change | no change | no change | no change | no change | no change |
| | Tropical climate | no change | no change | no change | no change | no change | color change |

## Claims

1. The water-dispersion priming enamel - rust modifier for obtaining protective-decorative coating, comprising synthetic latex, phosphonic acids, modifying additive, regulators of physical and chemical properties, auxiliary substances and water, **characterized by** the fact that it contains 50% water dispersion of synthetic polymer with pH 3.5-4.0 as a film former, phosphonic acids as a rust modifier and methylpyrrolidone as an agent regulating rheological properties, flowability, viscosity and drying parameters of coating with the following ratio of components, in wt. %:
| | | |
|---|---|---|
| - synthetic polymer, 50% water dispersion | - | 35.0-65.0 |
| - phosphonic acids: | | |
| nitriltrimethylphosphonic acid | - | 0.1-0.6 |
| oxyethylidenediphosphonic acid | - | 1.8-2.3 |
| - methylpyrrolidone | - | 1.0-5.0. |

2. The water-dispersion priming enamel according to claim 1, comprising as auxiliary substances: fillers, pigments, wetting agents for fillers, foam suppressors, cross-linking agents, frost-hardening agent, wherein as fillers it comprises kaolin, talc and titanium dioxide, as a pigment - acrylic-based coloring concentrate (VD-AK Solta 400), as a wetting agent for fillers - acrylic disperser with pH 7.5 (Rustan 10 DN), as a foam suppressor - VUK-04, as a cross-linking agent - 30% water solution of NH₄OH, as a frost-hardening agent - ethylene glycol with the following ratio of components, in wt. %:
| | | |
|---|---|---|
| - fillers: | | |
| kaolin | - | 12-7 |
| talc | - | 8-11 |
| titanium dioxide | - | 5-12 |
| - acrylic-based coloring concentrate (VD-AK Solta 400) | - | 8-16 |
| - wetting agent - acrylic disperser (Rustan 10 DN) | - | 1.0-1.5 |
| - foam suppressor VUK-04 | - | 0.1-0.5 |
| - cross-linking agent 30% water solution of NH₄OH | - | 1.0-3.0 |
| - ethylene glycol | - | 8.0-10.0 |
| - water | - | the rest |

3. The method for obtaining the water-dispersion priming enamel according to claims 1-2, including mixing of synthetic latex, phosphonic acids, modifying additive, regulators of physical and chemical properties, auxiliary substances and water which is **characterized by** the fact that the mixing is carried out in a high-speed mixer, wherein primarily OEDPA, NTPA, ethylene glycol and water are fed into the mixer, mixed for 30 minutes, then fillers and acrylic disperser are added, the rotation rate is increased, then when the dispersion reaches 20 µm by the grindometer, a minimum mixing rate is set and cross-linking agent, synthetic latex, coloring concentrate, methylpyrrolidone and foam suppressor are added, mixed for 30 minutes at the minimum rotation rate and are kept for 3 hours for settling the foam.
